# EUROPEAN PATENT SPECIFICATION

(11) **EP 0 437 506 B1**
(45) Date of publication and mention of the grant of the patent: **08.06.1994**
(21) Application number: 89911658.6
(22) Date of filing: 04.10.1989
(51) Int. Cl.: G03B 17/24

(54) **IMPLICIT MID ROLL INTERRUPT PROTECTION CODE FOR CAMERA USING DEDICATED MAGNETIC TRACKS ON FILM**
SCHUTZKODE ZUM ABBRUCH DER FILMFOERDERUNG FÜR EINE KAMERA MIT ZUGEORDNETEN MAGNETSPUREN AM FILM
CODE DE PROTECTION CONTRE LES DOUBLES EXPOSITIONS POUR APPAREIL PHOTOGRAPHIQUE, UTILISANT DES PISTES MAGNETIQUES SPECIALISEES SUR LE FILM

(30) Priority: 07.10.1988 US 255672
(43) Date of publication of application: 24.07.1991
(73) Proprietor: EASTMAN KODAK COMPANY, Rochester, New York 14650-2201 (US)
(72) Inventor: WASH, Michael, Lee, Pittsford, NY 14534 (US)
(74) Representative: Blickle, K. Werner, Dipl.-Ing.
(86) International application number: US8904363
(87) International publication number: WO9004204

(56) References cited:
- FR-A- 2 295 453
- US-A- 3 379 095
- US-A- 4 054 920
- US-A- 4 443 099

## Description

### BACKGROUND OF THE INVENTION

### Limitations of Current Consumer Photography Technology

Communication between the camera user and the dealer or photofinisher typically requires written forms which are filled out by the user, usually well after a given scene has been photographed. Thus, in addition to the inconvenience of filling out such a form, scene-related information is typically lost or forgotten. Such information may include the user's desire to not have a particular frame printed or to have several prints made from a given frame, for example. Such information may also include the photographic parameters of the scene, observed by the user or by a sensor, which would have aided the photofinisher's classification of the scene to increase the quality of the prints made from the film.

Several factors reduce the efficiency of the overall photofinishing process. For example, in a large photofinishing laboratory not operating on a 24 hour per day basis, the film processing equipment must lie dormant for a period of time at the beginning of each work day until enough incoming customer film has been sorted to form one batch of a minimum number (e.g. 70) of film strips of the same type (such as color negative 35 mm film) to justify running the printing equipment. Of course, undeveloped film (regular customer orders) must be separated from developed film (print re-orders).

More significant sources of inefficiency in the photofinishing process include the mechanical steps required to maintain proper correspondence between each film strip and the prints made from it, as well as the customer's identity. These mechanical steps include the sorting and handling of each form or envelope originally filled out by the customer so that the envelope follows the customer's film strip throughout the photofinishing process and winds up with the corresponding set of prints.

One of the most significant sources of inefficiency in the photofinishing process arises from the necessity of re-printing an image from a particular frame on a customer's film strip whenever inspection reveals that the corresponding original print was incorrectly made (usually by an incorrect exposure of the photosensitive print paper to the developed film negative image). In order to replace the original print with a better (so-called "makeover") print, the exposure conditions ("classification") used to make the original print from the negative film image must first be corrected. Somehow, the particular film negative frame in question must be re-classified and then re-printed while preserving the original prints of the other frames. The mechanical steps include notching the prints to indicate the boundaries between adjacent prints and between adjacent orders on a roll of prints as well as marking any original print requiring a makeover in a labor intensive procedure which ensures that proper correspondence between each film strip and the corresponding original prints, makeover prints and customer order form (envelope) is never lost.

### Problems to be Solved by the Invention

Recording of information on the film has been loosely suggested as one possible way around some of the limitations described above. These suggestions have ranged from optical recording of eye-readable symbols or machine readable symbols to the magnetic recording of machine readable data. Of course, optical recording on the film has only limited use, because once the film has been developed, no further recording may be done. Furthermore, the information must be restricted to those limited areas on the film not occupied by the camera-exposed image of each frame, a significant limitation on the amount of information that can be recorded.

With magnetic recording in a virtually transparent magnetic layer, high density recording may be done everywhere on the film including in the image area, so that all relevant information theoretically could be recorded with each frame on the film. However, what has not been recognized in the prior art is that complete exploitation of the potential capabilities of magnetic recording on film results in an unwieldy mass of data being recorded on the film, various bits of which must be separately accessed at various stages of the film use by camera and photofinisher. In such a scenario, the photofinisher in particular must find a certain needle of data in a massive haystack of data at a given step in the photofinishing process.

The problem to be solved by the invention is how to employ magnetic data recording on film as a means for double exposure protection or mid roll interrupt protection in a camera.

### SUMMARY OF THE INVENTION

A virtually transparent magnetic layer is included as an additional layer in a color negative film. Information exchange between various users of the film--such as (for example) the film manufacturer, the camera user, the dealer and photofinisher--is carried via plural longitudinal magnetic tracks on the film that begin and end in individual frames. Each track is dedicated to the writing and reading of a predetermined set of parameters related to the corresponding frame. All data is recorded as N-bit character where N is preferably six. Each track is preceeded by certain six-bit character called an ID sentinel on-film magnetic data recording by the film manufacturer uses an ID sentinel different from that employed in the camera. The camera automatically prevents exposure of any frame bearing a camera ID sentinel, thus providing protection from double exposures.

### DESCRIPTION OF THE DRAWINGS

The invention may be understood by reference to the accompanying drawings, of which:
Fig. 1 is a diagram illustrating the parallel dedicated tracks in a virtually transparent magnetic layer on film having a special perforation format particularly adapted for use in cameras having a magnetic film read/write capability;
Fig. 2 is a simplified diagram illustrating the concept of a camera adapted to read or write data on the film of Fig. 1;
Fig. 3 is a diagram illustrating the parallel dedicated tracks in a virtually transparent magnetic layer on film having the currently ubiquitous perforation format used in ordinary cameras not having a magnetic film read/write capability;
Fig. 4 is a diagram illustrating the accommodation of film wander in the camera of Fig. 2 by the use of different head widths at the various stages of film use;
Fig. 5 is a block diagram illustrating the architecture of a read only memory containing a directory of track locations for various parameters which may be magnetically written or read on the film, in accordance with the dedicated track format of Fig. 1;
Fig. 6 is a diagram illustrating the preferred data format used in the dedicated tracks of Fig. 1 or Fig. 3;
Fig. 7 illustrates an exemplary data identification code table for universal use with the data format of Fig. 6 by all stages of film use including camera and photofinisher;
Fig. 8 illustrates an exemplary symbol table for universal use with the data format of Fig. 6 by all stages of film use including camera and photofinisher;
Fig. 9 illustrates an exemplary reserved control symbol table for universal use with the data format of Fig. 6 by all stages of film use including camera and photofinisher;
Fig. 10 is a block diagram illustrating a photofinishing system having magnetic read/write hardware including automated protocols which use the film of Figs. 1 or 3 as a scratch pad memory for increased efficiency or performance;
Fig. 11 illustrates a typical operator's keyboard used in the photofinishing system of Fig. 10 to classify developed negatives for correct print exposures;
Figs. 12a and 12b illustrate the form of the self-clocking code used in the invention;
Fig. 13 illustrates the use of each start and stop sentinel character and its compliment to facilitate film reversal sensing;
Figs. 14a and 14b illustrate the type of film reversal which is best detected using the invention; and
Fig. 15 is a simplified block diagram illustrating a self-clocking encoding/decoding on-film magnetic recording system.

### DETAILED DESCRIPTION OF THE INVENTION

### Preferred Format of the Dedicated Tracks on Film

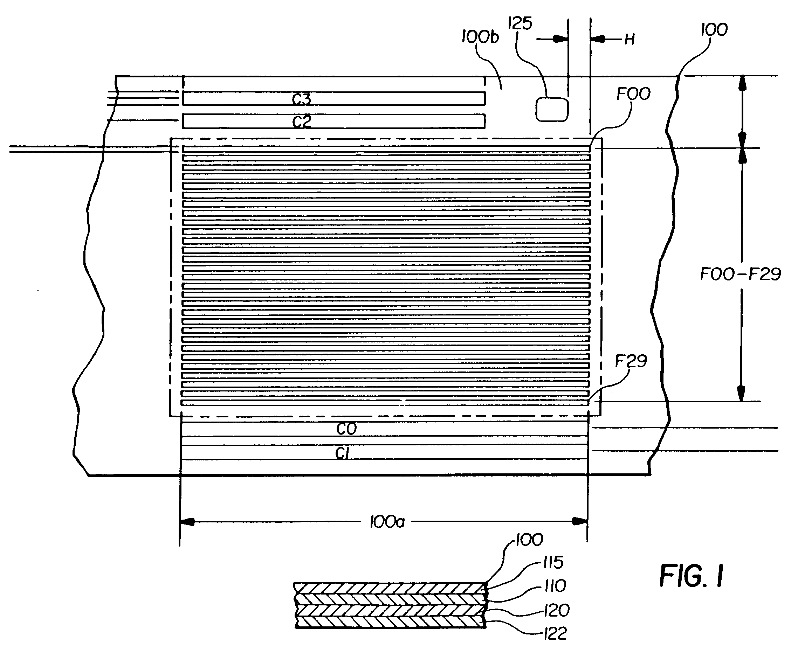

Referring to Fig. 1, a strip 100 of color negative film 35 millimeters wide includes a base 110, various well-known photo-chemical layers 115 on one side of the base 110 and a virtually transparent magnetic layer 120 on the other side. An anti-static and lubricating layer 122 overlies the magnetic layer 120. The film strip 100 includes perforations 125 spaced along the film edge at regular intervals matching the pitch of a metering pawl in a camera adapted to use the film strip 100.

For purposes of recording data in the magnetic layer 120, each frame of the film strip 100 is divided into a plurality of predetermined parallel longitudinal track locations where magnetic tracks of data may be recorded. Each of the tracks is preferably labeled as shown in Fig. 1. In particular, the two outermost tracks along each edge of the film strip 100 are tracks C0, C1 and tracks C2, C3, respectively. The thirty innermost tracks are tracks F00 through F29. Each one of the outermost tracks C0 through C3 is dedicated to the recording of a particular type of information by a camera having magnetic recording capability, in accordance with a pre-arrangement universally established for all cameras and photofinishers. In a similar manner, each one of the innermost tracks is dedicated to the recording of a particular type of information by a particular type of photofinishing (or other) equipment, in accordance with the above-referenced universal pre-arrangement.

In order to accommodate the presence of the camera tracks C0 through C3 along the film strip edges, the perforations 125 are excluded from periodic imperforate edge regions 100a adjacent each exposed frame and are restricted to intermediate regions 100b lying between subsequent frames. In the embodiment of Fig. 1, there is only one perforation in each intermediate region 100b. In the preferred embodiment, the perforations lie along only one longitudinal edge of the film strip 100.

### Use of Dedicated Film Tracks in a Camera

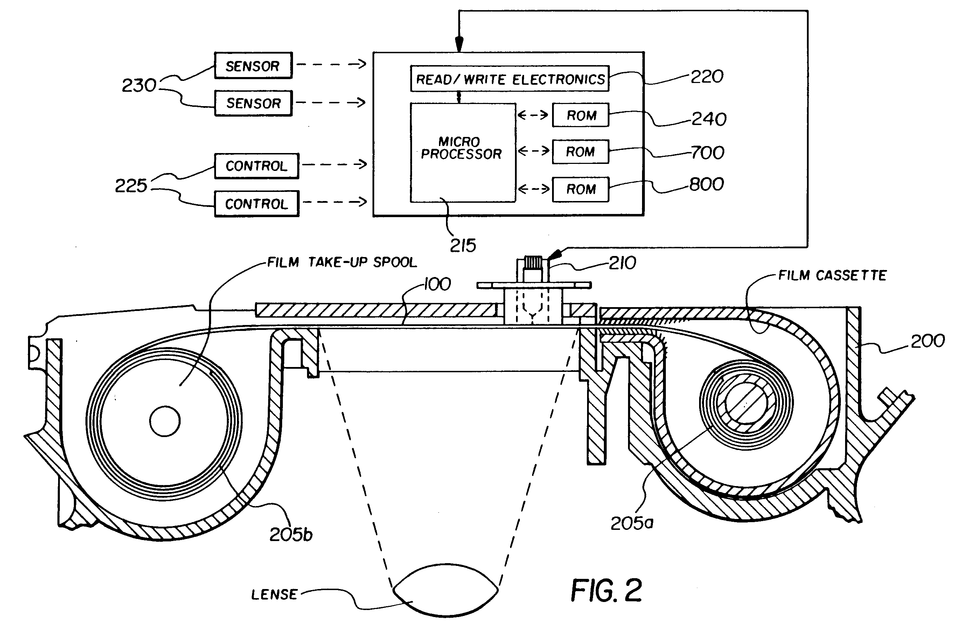

Referring to Fig. 2, a camera 200 transports the film strip 100 between the reels 205a,b, of a film cartridge and a take-up sprocket, respectively, conforming to the format of the perforations 125 of Fig. 1. The camera 200 includes a magnetic read/write head 210 in near proximity with the magnetic layer 120 on the unsensitized side of the film strip 100. A microprocessor 215 controls magnetic data recording or playback by the head 210 through head electronics 220.

The microprocessor 215 may accept order information to be magnetically recorded on the film strip 100 from the camera user through camera Controls 225, such information pertaining to the number of prints desired for a given frame, by frame number, for example, or the name and address of the camera user for ultimate use by the photofinisher. The microprocessor 215 may also accept scene related information from scene sensors 230 to be magnetically recorded on the film strip 100 for ultimate use by the photofinisher. Such information may include camera orientation, scene luminance and the like.

### Film-Velocity Independent Data Code

Using the dedicated track on film format of Fig. 1, data is recorded by either a camera, an order entry station, the photofinisher or any other stage of film use, by converting the data into binary bits and then encoding the binary data using a unique self-clocking code. Such self-clocking encoding is performed in accordance with the teachings of U.S. Patent Application Serial Number 206,646 filed June 14, 1988 by Michael Wash entitled "Method for Modulating a Binary Data Stream" and assigned to the assignee of the present application, the disclosure of which is incorporated herein by reference.

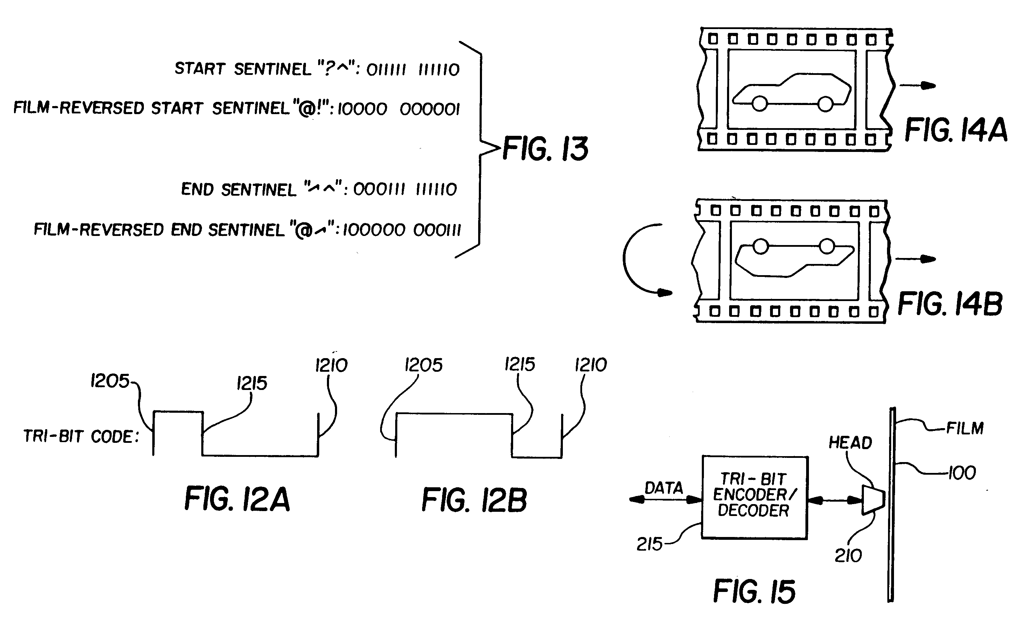

The self-clocking code described in the referenced patent application is briefly summarized here with reference to Fig. 12 of the accompanying drawings. The code comprises a serial stream of pulse edge transitions of a first type (e.g. positive-going edge transitions) and those of a second type (e.g. negative-going edge transitions) in alternating sequence. The first type pulse transitions serve as clock indicators while the second type serve as binary data indicators. A binary one is indicated in Fig 12a by a second type pulse transition 1215 which is temporally closer to the immediately preceeding first type pulse transition 1205 and farther from the succeeding first type pulse transition 1210. A binary zero is indicated in Fig. 12b by a second type pulse transition 1215' temporally closer to the succeeding first type pulse transition 1210 than to the preceeding one. With this novel self-clocking code, film transport velocity can vary during recording and playback without affecting the ability to synchronize and read the recorded data. Thus, the camera of Fig. 2 may record data while winding the film between exposures without imposing any velocity controls or recording an independent clock track.

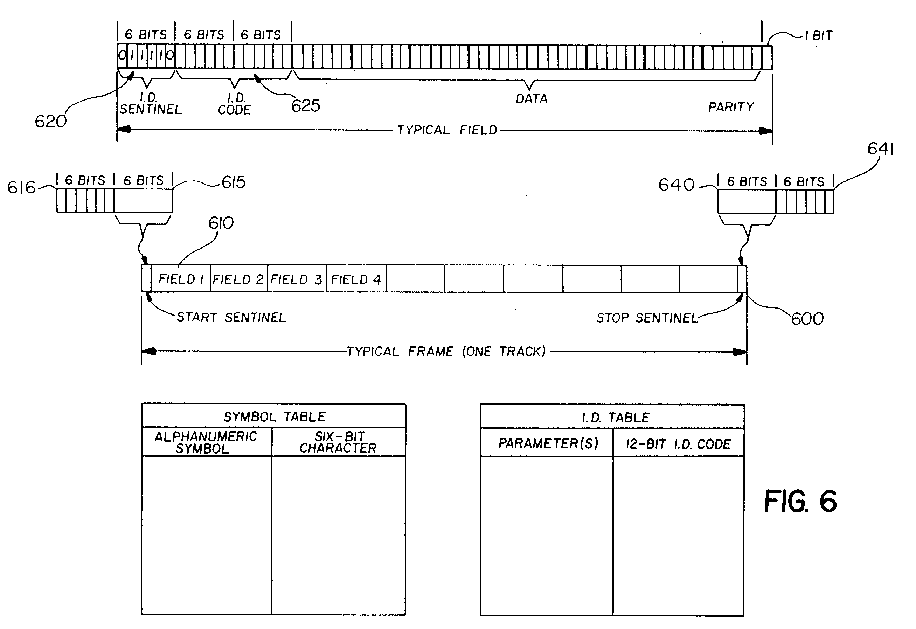

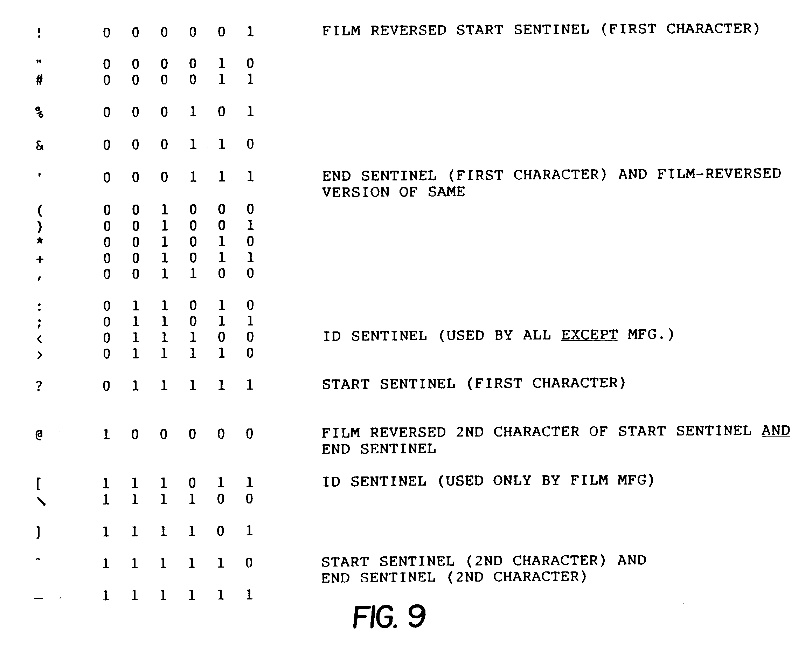

The self-clocking code of Fig. 12 facilitates the automatic detection of film reversal. For this purpose, two six-bit characters from the table of reserved characters of Fig. 9 are chosen as the start and stop sentinels, respectively, recorded at the beginning and end of each frame in each dedicated track, in a manner described herein with reference to Fig. 6. Furthermore, the compliments of the two symbols thus chosen are also reserved, as indicated in Fig. 13, the latter two reserved symbols comprising a film-reversed start sentinel and a film-reversed stop sentinel. This arrangement exploits a property of the self-clocking code of Fig. 12 in which self-clocking data played back backwards (by transporting the film past the head in the direction opposite from that in which it was transported earlier during recording) results in its complement being decoded.

Thus, if the film image of Fig. 14a corresponds to the orientation of the film during the magnetic recording of data on the film by the camera for example, and if Fig. 14b corresponds to the orientation of the film as it is spliced and loaded into photofinishing equipment having magnetic read/write capability, the film reversed stop sentinel will be detected, followed by the film reversed start sentinel, with every frame of data. Such film-reversed start and stop sentinels serve as flags to notify the photofinisher that the film has been rotated as indicated in Fig. 14b. If the film has been turned inside out instead, the technique of Fig. 13 does not create a flag. However, such an error is easily detected, since it causes the opposite side of the film to face the photofinisher's magnetic heads, thus increasing the distance between the heads and the magnetic layer 120 of Fig. 1, resulting in a decrease in signal-to-noise ratio.

Fig. 15 illustrates a simple example of a magnetics on film self-clocking read/write system useful in the camera 200 of Fig. 2.

The advantage of the longitudinal dedicated track format of Fig. 1 is that magnetic recording of data on the film strip 100 may be performed by the camera using a relatively stationary head (i.e. the head 210) by buffering all of the data to be recorded in a particular frame in a particular camera track and then transmitting the data to the head just as the film is being wound to the next frame.

The microprocessor 215 includes a read only memory 240 containing instructions sufficient to ensure that each type of information received is recorded in the correct one of the dedicated camera tracks C0 - C3 in accordance with a universal pre-arrangement common to both the camera and the photofinisher. For this purpose, the microprocessor sorts and buffers each piece of information in compliance with the instructions stored in the read only memory 240. The nature of this pre-arrangement and the architecture of the read only memory will be described below in this specification.

### Dedicated Tracks Format for Ordinary Cameras and Film

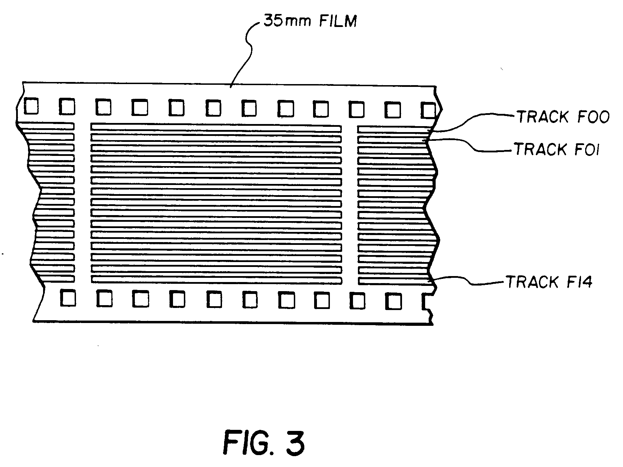

The format of the photofinisher tracks F00 through F29 is the same regardless of the placement of the film perforations 125 of Fig. 1. Thus, a photofinisher may employ the same magnetic recording protocols and hardware on all types of film provided that a virtually transparent magnetic layer (such as the layer 120 of Fig. 1) is added to all types of film. Thus, referring to Fig. 3, ordinary 35 mm color negative film having the now-standard pattern of closely spaced perforations along both film edges accommodates the photofinisher tracks F00 through F29 having the same width and spacing as that of the special film format of Fig. 1. Although the perforations of Fig. 3 preclude the presence of the camera tracks C0 through C3, such film is not used in cameras having magnetic read write capabilities and so the camera tracks need not be present. The advantage here is that all subsequent users of the film (i.e. photofinisher, film-to-video player, etc.) have been allocated the maximum number of tracks for all film formats, including those of Fig. 1 and of Fig. 3.

### Camera and Photofinisher Dedicated Track Widths

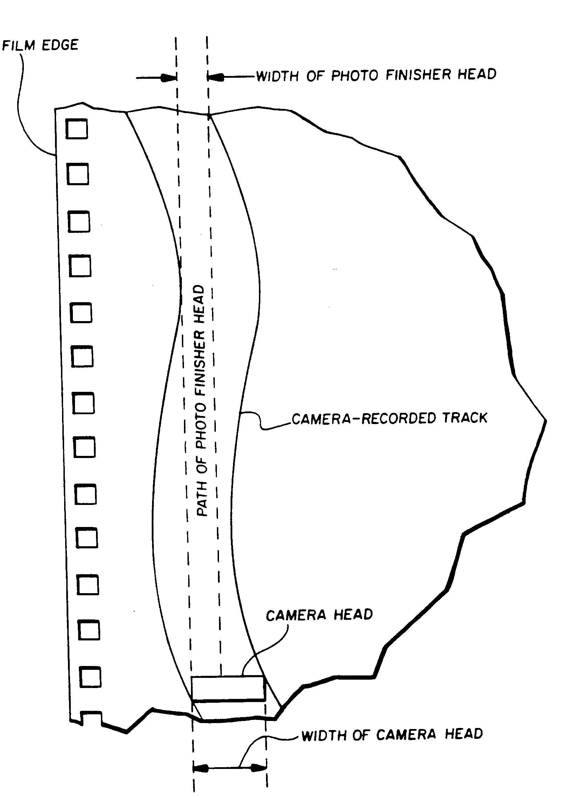

Referring to Fig. 4, the width of the camera dedicated tracks C0 - C3 is greater than that of the photofinisher tracks F00 - F29. Of course, these track widths are controlled by the selection of the camera head widths and the photofinisher head widths. Preferably, the difference is sufficient to accommodate film wander in the camera during winding of the film while recording is performed by the head 210. Such wandering causes the camera tracks to have the meandering appearance illustrated in Fig. 4. Note in Fig. 4 that the photofinisher head, which must read the camera tracks, does not leave the camera track because it has a much smaller width.

### Allocation of the Dedicated Tracks

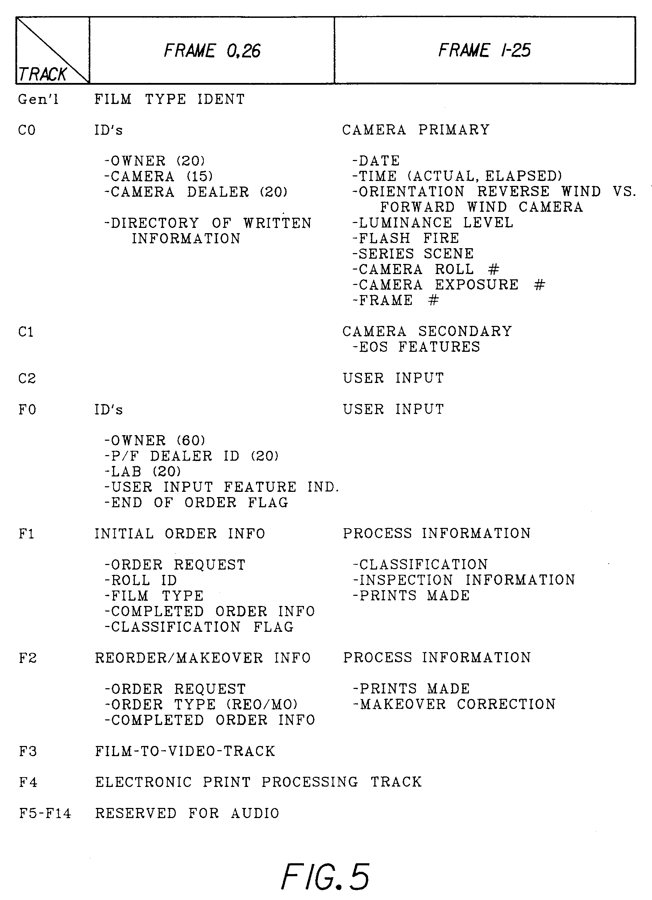

Fig. 5 illustrates the allocation of the dedicated tracks, among the various information types, implemented by microcodes stored in the read only memory 240 of Fig. 2. There are four camera tracks and fifteen photofinisher tracks in each frame of the film exposed by the camera, these frames being designated frames 1 through 25. The film leader and trailer are designated frames 0 and 26, respectively. In general, the information recorded in frames 0 and 26 pertains to the film strip 100 as a whole, while the information recorded in each of frames 1 through 25 is unique for a particular frame. In Fig. 5, three of the four camera tracks are used by the camera, while three of the thirty photofinisher tracks are used by the photofinisher. The rest of the photofinisher tracks are reserved for the recording of film-to-video player instructions (track F03), electronic print processing instructions (track F04) and audio (track F05 through F14). The remaining tracks (F15 - F29) are reserved for unforeseen purposes.

Each of the tracks is dedicated to a particular group of information types which would in most cases be written or read together. Thus, frame 0 track C0 is reserved for information relating to the owner and the camera for recording by the camera. Similarly, frame 0 track F00 is reserved for information relating to the owner and the photofinisher for recording by the photofinisher. Likewise, track F00 of frame 0 is reserved for recording by the photofinisher--or by an order entry station--of the customer's instructions, the film type, and related information pertaining to the treatment of the order. Track F02 of frame 0 is reserved for the recording of historical information regarding the location of frames requiring makeover prints and print reorders by the customer, for use by the photofinisher during a subsequent print reorder by the customer.

Track C0 of each exposed frame (frames 1-25) is reserved for scene-related information for recording by the camera, such as scene luminance, camera orientation and the like. Similarly, track F01 is reserved for photofinisher information unique to a particular exposed frame such as the classification of the negative image (determination of the proper print exposure), number of prints made, etc. Any makeover correction to the classification is recorded in track F02.

The embodiment of Fig. 5 does not take into account all of the information types which may be magnetically recorded by the camera, retail order station or photofinisher on the film. However, the embodiment of Fig. 5 is an example of the manner in which all information types may be classified as to which track each one is to be assigned. The principle underlying the manner in which each information type is assigned to a particular track is that all information related to a particular transaction should be recorded on the same track, so that that track is dedicated to being written or read during those operations associated with that transaction.

The various transactions provided for in the embodiment of Fig. 5 are: (a) recording of customer data, including the customer address; (b) recording of scene-related information with each exposure, including parameters characterizing lighting conditions and camera exposure settings; (c) recording by the retail order station or photofinisher of customer order information, such as the number of prints desired; (d) the recording of inspection and makeover classification correction for a given frame by the photofinisher; (e) the recording of a summary of makeover data or print reorder data applicable to the entire film roll; (f) the recording of instructions for a film to video player; (g) the recording of instructions for electronic print processing; and (h) the recording of audio. In general (but not always) each of the magnetic recording tracks illustrated in Fig. 1 is dedicated to one of the foregoing transactions (a) through (h). The result is that during recording the amount of searching for an available recording location is minimized while during playback the amount of searching through data irrelevant for a particular operation is also minimized. For example, during the classification operation, in which the optimum print exposure condition for each frame is determined, all scene-related information potentially helpful in determining the proper classification may be obtained by reading data from a single track, namely the camera-dedicated track C0 in each exposed frame (frames 1-25). No other track need be read.

### Preferred Data Architecture

As previously described herein with respect to Fig. 1, the data recorded magnetically on the film strip 100 is divided into frames exposed by the camera (frames 1-25) as well as the film leader (frame 0), the data within each frame being allocated among a plurality of dedicated tracks within the frame. Fig. 6 illustrates the preferred data format within each track of each frame.

In Fig. 6, each track 600 has the length of one frame and is divided into a plurality of fields 610. Each track 600 includes a predicate start sentinel 615 at its beginning end (the left-hand edge of the track in Fig. 6 where the head begins its scanning of the track 600) and a stop sentinel 640 at its end. Each field includes a predicate ID sentinel 620 followed immediately by an ID code 625. The purpose of the track start sentinel 615 is to notify the read/write system in the camera or in the photofinishing hardware of the beginning location of the track 600. The purpose of the field ID sentinel 620 is to notify the same system of the beginning location of each succeeding field in the track 600. The purpose of the ID code 625 is to identify the type of information recorded in the following field. In the preferred embodiment of the invention, each start sentinel 615 is preceeded by a start sync mark 616 and each end sentinel 640 is followed by a stop sync mark 641. The marks 616, 641 enable special circuitry to achieve proper synchronization under adverse conditions described therein.

The ID code is recorded in the beginning of each field and is determined by the information type which follows it. For example, if the camera 200 of Fig. 2 is about to record the level of scene luminance observed by sensors on the camera during exposure of the frame, the camera first causes a unique ID code to be recorded just ahead of the data representing the scene luminance level. In the simplest embodiment, a unique ID code is assigned to each parameter or information type which may be recorded on the film, so that the ID codes for all possible information types constitute a large dictionary. Inasmuch as the same dictionary must be employed by all stages in the life cycle of the film (e.g., camera, photofinisher, etc.), identical read only memories are provided at each stage, each of these memories embodying a universal ID code dictionary and controlling the reading and writing of ID codes at each stage of film use.

The advantage is that the placement of a particular parameter within the track 600 by the camera need not be previously known by the photofinisher in order for the photofinisher to be able to find that parameter on the track, since the photofinisher may simply refer to the corresponding ID code recorded by the camera. This same advantage holds between any other separate components, where one component writes data onto the film and the other independently reads the data from the film at a later time and, typically, at a different location.

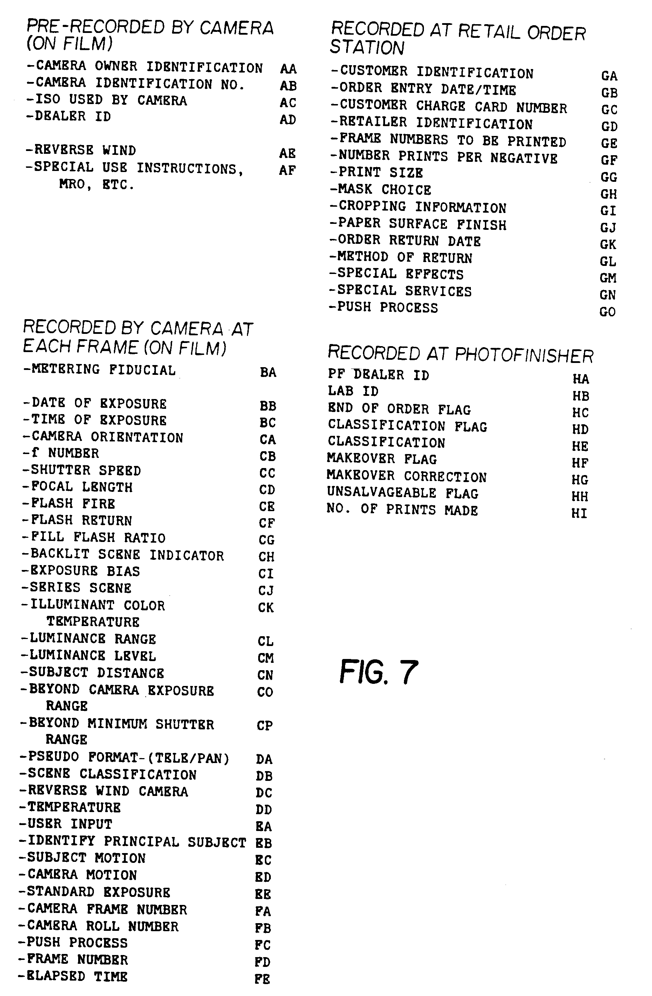

One exemplary embodiment of a universal ID code dictionary is illustrated in Fig. 7. The dictionary of Fig. 7 is implemented as a set of microcodes stored in a read only memory 700 connected to the microprocessor of Fig. 2. The read only memory 700 of Fig. 7 defines a two-character ID code for each parameter which may be recorded. In this embodiment, the ID codes start at AA and end at HI, as just one possible example. While Fig. 7 depicts each ID code as being associated with the name of a particular parameter, in practice each ID code would be associated with the buffer or memory location of that parameter in the recording system so as to identify the corresponding data in terms of its location prior to being recorded. A system designer may use Fig. 7, for example, to construct the actual machine language content of the read only memory 700, depending upon the particular system design employed.

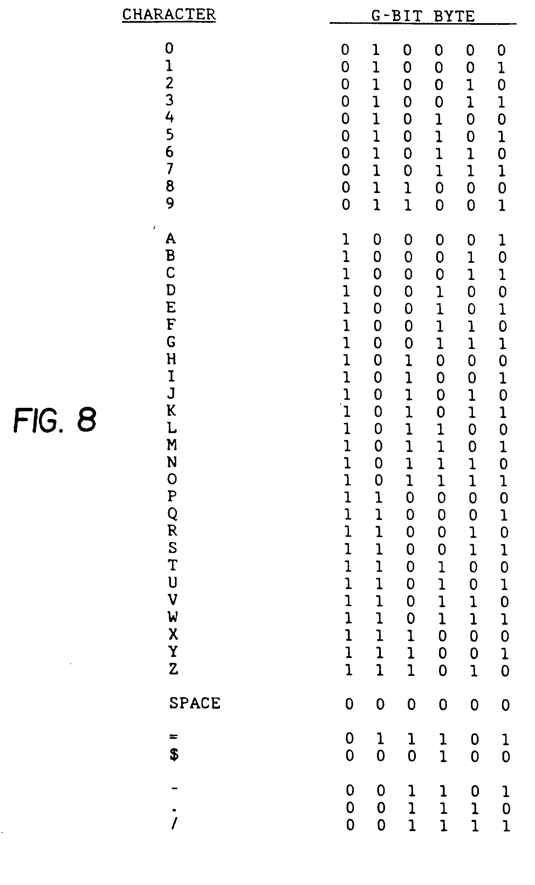

The binary bits recorded for each alphanumeric symbol representing a particular piece of information (e.g. scene luminance or customer address) or for one of the two-character ID codes of Fig. 7 are defined in accordance with the table of Fig. 8. The table of Fig. 8 is represented as a set of microcodes stored in a read only memory 800 connected to the microprocessor of 215. Each alphanumeric symbol is represented by a pattern of six binary bits. The read only memory 800 defines a universal symbol dictionary which is used to perform reading and writing of data on the film at all stages of film use. The table of Fig. 8 is derived from the ASCII standard symbols.

The read only memory 800 also defines the six-bit patterns which are reserved for control purposes and which therefore may not be used for information or data. These reserved symbols are set forth in the exemplary table of Fig. 9, and include the control symbols illustrated in Fig. 6, including the start symbol 615a,b, the ID sentinel 620, a frame stop symbol 640a,b and the compliments of the start and stop sentinels 615 and 640. Other symbols are reserved in Fig. 9 in order to permit the skilled system designer to exercise other read or write controls as desired.

Referring again to Fig. 6, each data field ends with a six-bit parity character as shown. The first (most significant) two bits of the parity character are always 10, to prevent the parity character from assuming the value of any of the reserved characters of Fig. 9. The next bit is reserved for unforeseen purposes. The last (least significant) these bits provide single bit parity check for (a) the ID code of the field, (b) the remaining data characters in the field, and (c) the parity character itself, respectively. This format preserves the six-bit-per-byte boundary, even for the parity bits, thus simplifying the task of reading recorded data. It imposes far less overhead than the well-known technique of including one parity bit per character.

In Fig. 2, the microprocessor 215 in the camera 200, while referring to the read only memory 240 for the track locations of the various allowed parameters, must also refer to read only memories ?00 and 800 for the universal ID code dictionary and universal symbol dictionary in order that subsequent readers of the data recorded by the camera 200 may properly interpret the data.

### Implicit Mid Roll Interrupt Protection Code For Camera

Turning now to the subject matter claimed in the present application and referring to Fig. 9, by reserving the six-bit character "[" as the ID sentinel 620 used by the film manufacturer only and "〈" as the ID sentinel for all other users (camera, photofinisher, etc.), the camera of Fig. 2 can always detect the film frame (position) of the next unexposed frame by simply searching for the ID sentinel "〈" at the beginning of any camera track. Preferably, the camera's processor 215 of Fig. 2 is programmed with instructions to do just that each time a film cartridge is loaded.

### Exemplary Use of Dedicated Tracks in Photofinishing

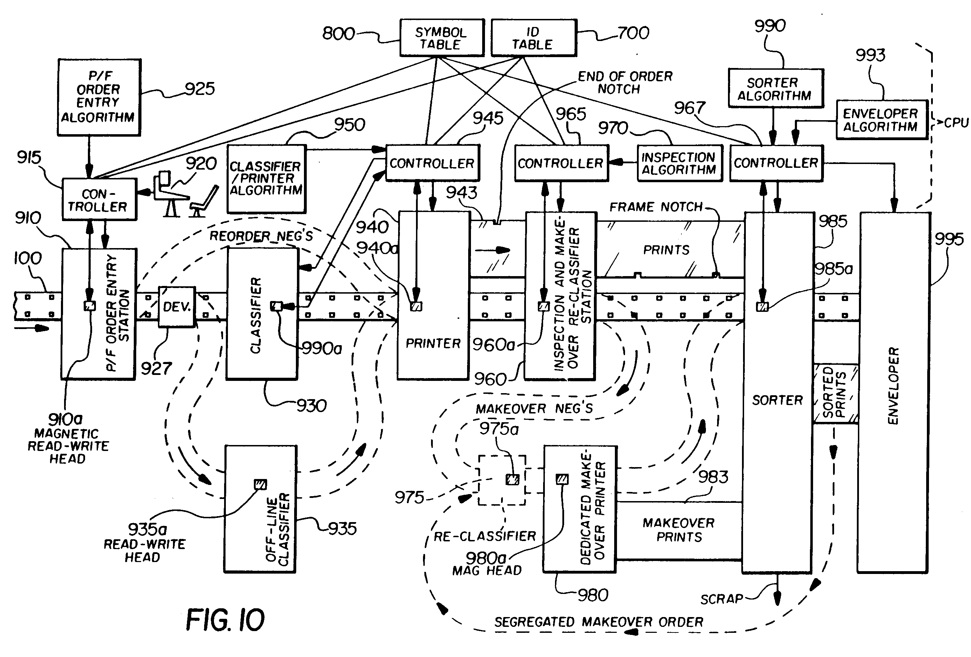

Use of the dedicated film tracks for magnetic recording of information by a camera has been described with reference to the example of Fig. 2. Fig. 10 illustrates one example of the use of the dedicated film tracks (of either Fig. 1 or Fig. 3) for magnetic reading and writing in a photofinishing system. In general, such a photofinishing system employs its own version of the read only memories 240, 700, 800 for track location, an ID code dictionary and a symbol dictionary.

In Fig. 10, the film strip 100 is removed from the cartridge (or at least partially extracted to expose its leader--frame 0) at an order entry station 910. The order entry station 910 may be located either at the dealer or at the photo-finishing laboratory. The order entry station has a magnetic read/write system including a head 910a and a controller (microprocessor) 915 which executes an order entry algorithm stored in memory 925. This algorithm defines the correct track locations in frame 0 for the recording of customer-related information, including the number of prints desired, the customer's name and address, etc., entered in at a terminal 920 or read directly from one of the camera tracks. A developer 927 develops the film strip 100 to form a negative image in each exposed frame.

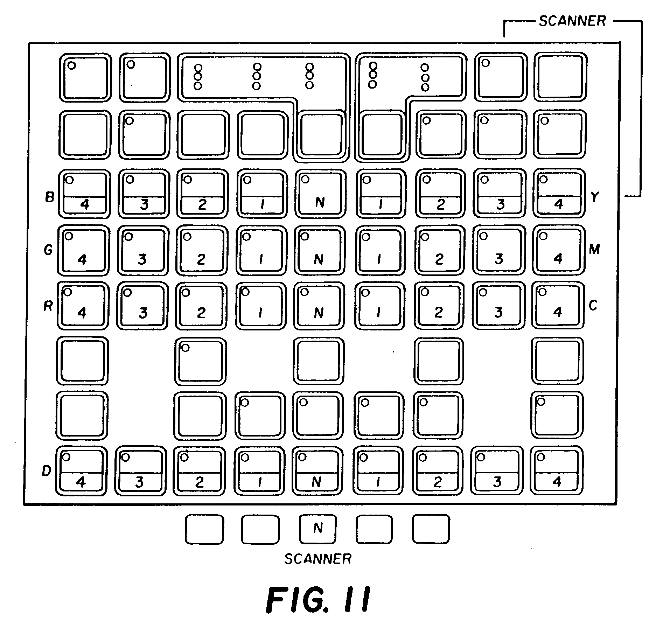

The film strip 100 then enters a classifier 930 which determines the optimum print exposure condition for each frame on the film strip 100. The classifier may do this either manually under control of a human operator or automatically using an image sensor such as is done in the Eastman Kodak 3510 Color Printer or in the Eastman Kodak CLAS 35 Color Printer. An exemplary manual control terminal included in the manual version of the classifier 930 is illustrated in Fig. 11. The luminance value at which the photosensitive print paper is to be exposed through a given negative image may be changed from a nominal value (gray level) by arbitrary values -4 to +4 by pressing one of the appropriate buttons in the row of buttons labelled "D" on the left side of the terminal of Fig. 11. The intensity of red, green and blue light at which the print paper is exposed may be altered from pre-defined nominal values in similar manner by arbitrary values -4 to +4 by pushing the appropriate buttons in the corresponding one of the rows of buttons label led "R", "G" and "B", respectively. The resulting classification (defined by the luminance, red, green and blue print exposure values) is recorded by the classifier's magnetic head 930a in the appropriate one of the dedicated tracks (in accordance with the track allocation defined in a read only memory such as the memory 240 of Fig. 5).

It should be noted that if data previously recorded on the film strip 100 indicates that it has been previously developed and printed (so that a classification value is stored in each frame in the appropriate track), then the developer 927 and the classifier 930 are automatically bypassed.

A printer 940 receives the film strip 100, reads the classification previously recorded in each frame by the classifier 930, and exposes one frame in a roll of photosensitive paper 937 through the corresponding negative frame with an exposure whose characteristics meet the recorded classification. The printer 940 includes its own magnetic read/write system, such as a magnetic head 940a, a controller 945 and a memory 950 storing a classifier/printer algorithm. This algorithm governs the magnetic reading and writing by the printer 940 and classifier 930 in accordance with the dedicated tracks format of Fig 1 or Fig. 3. For example, the printer/classifier algorithm requires the controller 945 to determine whether camera tracks (tracks C0 through C3) were previously recorded on the film strip 100. If so, the dedicated track film format of Fig. 1 applies and scene-related information (if used by the classifier 930 to enhance the accuracy of the classification operation) may be found by reading the appropriate track. Likewise, the printer/classifier algorithm in the memory 950 tells the printer 940 where to find the classification value recorded in each frame by the classifier 930.

An operator at an inspection station views each of the prints on the print roll 943 to determine whether a makeover print is required for any of them. Under control of a controller 965 which executes an inspection algorithm stored in a memory 970, data is recorded on the film strip 100 in the appropriate track by the inspection station's magnetic head 960a reflecting the necessity (if any) of a makeover print in a given frame. Presumably the makeover was necessitated by an incorrect classification, and a correction to the original classification must be computed and recorded in the appropriate track on the film strip 100. In one embodiment, this is done by the inspection station 960 itself, while in another embodiment this is done at a separate re-classifier 975 having its own magnetic recording head 975a and recording system for this purpose. The film strip 100--which may be included in a roll of many such film strips--is sent to a makeover printer 980, typically by transferring the entire roll. The makeover printer 980 has its own magnetic read/write system, including magnetic head 980a, with which it may read the appropriate data in the appropriate tracks to determine which of the frames require makeover prints and, for each one of these, what the original classification value was and what the classification correction is. From this information, the makeover printer exposes the appropriate frames on the film strip 100 using the corrected classification values.

A roll of makeover prints 983 produced by the makeover printer 980, the roll of prints 943 produced by the printer 940 and the roll of developed film including the film strip 100 are all fed to a sorter 985. The sorter collates the individual original and makeover prints with the corresponding film strips into complete customer orders, discarding any original prints whenever corresponding makeover prints have been made. Whether a corresponding makeover print has been made is determined by the sorter 985 through its magnetic read/write system including a controller 987 which executes a sorter algorithm stored in a memory 990 and the sorter's magnetic head 985a. The head 985a is simply directed to read the required data from the appropriate one of the dedicated tracks on the film strip 100 by the controller 987, in accordance with the track allocation illustrated in Fig. 5.

Magnetically reading and writing data in a plurality of parallel magnetic tracks is a known technique in the field of magnetic tape recording and magnetic disk recording. One way is to use an array of stationary magnetic heads, one head for each track. Such an array is sold by Spin Physics, San Diego, California, as part number 203454.

While the invention has been described in detail by specific reference to preferred embodiments thereof, it is understood that other variations and modifications may be made without departing from the scope of the invention.

## Claims

1. A method for preventing double exposure of individual film frames, implemented in a camera (200) having a magnetic read/write system (220) with a magnetic head (210) and adapted to receive a magnetically coated film (100), said film being adapted for recording of magnetic data therein by the manufacturer thereof prior to be received in said camera (200), and for recording of magnetic data on tracks (C0, C1, C2, C3) by said magnetic read/write head (210) related to each individual frame, said method comprising the steps of:
recording of data, including a camera-dedicated N-bit ID sentinel, in correspondence with each exposure of said frame in said film (100) by said magnetic read/write system (220) so as to record data at least on one of said magnetic tracks (C0, C1, C2, C3) in said film (100) which tracks start at a location proximal said frame;
transporting successive frames of said film (100) past said magnetic head (210) so that said magnetic read/write system (220) searches for data corresponding to said camera-dedicated N-bit ID sentinel until finding one frame in which said magnetic-system (220) senses an absence of said camera-dedicated N-bit ID sentinel, and thereupon juxtaposing said one frame in preparation for the exposure in said camera (200).

2. The method of claim 1 wherein said film manufacturer employs a manufacturer-dedicated N-bit ID sentinel different from said camera-dedicated N-bit ID sentinel.

3. The method of claim 1 wherein said data other than said camera-dedicated N-bit ID sentinel is representable by a set of symbols not including the symbol representing said the camera-dedicated N-bit ID sentinel.

## Patentansprüche

1. Verfahren zur Vermeidung von Doppelbelichtungen einzelner Bildfelder in einer ein magnetisches Schreib-/Lese-System mit einem Magnetkopf (210) aufweisenden Kamera (200), zur Verwendung mit einem magnetbeschichteten Film (100), wobei durch den Filmhersteller magnetische Daten auf dem Film aufzeichenbar sind, bevor dieser in einer Kamera (200) verwendet wird, und wobei mittels des Schreib-/Lese-Magnetkopfs (210) magnetische Daten auf die Spuren (C0, C1, C2, C3) aufgezeichnet werden können, die den einzelnen Bildfeldern zugeordnet sind, gekennzeichnet durch folgende Schritte:
- Aufzeichnen von Daten mittels des Schreib-/Lese-Systems (220), einschließlich einer kamerabezogenen N-bit-Kennung, entsprechend jeder Belichtung eines Bildfeldes des Films (100), so daß mindestens auf einer der Magnetspuren (C0, C1, C2, C3) des Films (100), an einer Stelle nahe des Bildfeldes beginnend, Daten aufgezeichnet werden;
- Vorbeibewegen aufeinanderfolgender Bildfelder des Films (100) am Magnetkopf (210), damit das Schreib-/Lese-System (220) kamerabezogene N-bit-Kennungsdaten sucht, bis ein Bildfeld ohne solche Kennung gefunden ist, woraufhin dieses Bildfeld in Vorbereitung einer darauf erfolgenden Belichtung in der Kamera (200) korrekt positioniert wird.

2. Verfahren nach Anspruch 1, dadurch gekennzeichnet, daß der Filmhersteller eine von der kamerabezogenen N-bit-Kennung unterschiedliche Hersteller-N-bit-Kennung verwendet.

3. Verfahren nach Anspruch 1, dadurch gekennzeichnet, daß die von der kamerabezogenen N-bit-Kennung sich unterscheidenden Daten durch eine Gruppe von Symbolen dargestellt sind, die das Symbol für die kamerabezogene N-bit-Kennung nicht enthält.

## Revendications

1. Procédé permettant d'empêcher une double exposition de vues particulières d'un film, ce procédé étant mis en oeuvre dans un appareil photographique (200) qui possède un système de lecture/écriture magnétique (220) doté d'une tête magnétique (210) et est conçu pour recevoir un film (100) à revêtement magnétique, ledit film étant conçu pour permettre l'enregistrement de données magnétiques par son fabricant avant d'être mis en place dans ledit appareil photographique (200) et pour permettre l'enregistrement de données magnétiques sur des pistes (C0, C1, C2, C3) par ladite tête de lecture/écriture magnétique (210) en liaison avec chaque vue particulière, ledit procédé comprenant les opérations suivantes:
enregistrer des données, comportant un drapeau ID à N bits spécialement affecté à l'appareil photographique, en correspondance avec chaque exposition de ladite vue dudit film (100) au moyen dudit système de lecture/écriture magnétique (220) de façon à enregistrer des données au moins sur une desdites pistes magnétiques (C0, C1, C2, C3) dudit film (100), lesquelles pistes commencent en un emplacement proche de ladite vue;
transporter des vues successives dudit film (100) devant ladite tête magnétique (210) de façon que ledit système de lecture/écriture magnétique (220) recherche des données correspondant audit drapeau ID à N bits spécialement affecté à l'appareil photographique jusqu'à ce qu'il découvre une vue dans laquelle ledit système magnétique (220) détecte l'absence dudit drapeau ID à N bits spécialement affecté à l'appareil photographique, puis juxtaposer cette vue en préparation de l'exposition dans ledit appareil photographique (200).

2. Procédé selon la revendication 1, où ledit fabricant de film emploie un drapeau ID à N bits spécialement affecté au fabricant qui est différent dudit drapeau ID à N bits spécialement affecté à l'appareil photographique.

3. Procédé selon la revendication 1, où lesdites données autres que ledit drapeau ID à N bits spécialement affecté à l'appareil photographique peuvent être représentées par un ensemble de symboles ne comportant pas le symbole qui représente le drapeau ID à N bits spécialement affecté à l'appareil photographique.
